# EUROPEAN PATENT SPECIFICATION

(11) **EP 2 432 829 B1**
(45) Date of publication and mention of the grant of the patent: **18.04.2018**
(21) Application number: 10721121.1
(22) Date of filing: 17.05.2010
(51) Int. Cl.: C08L 1/28, C08L 5/00

(54) **POLYSACCHARIDE COMPOSITIONS**
POLYSACCHARIDZUSAMMENSETZUNGEN
COMPOSITIONS DE POLYSACCHARIDES

(30) Priority: 19.05.2009 EP 09006737
(43) Date of publication of application: 28.03.2012
(73) Proprietor: Cargill, Incorporated, Wayzata, MN 55391 (US)
(72) Inventor: MAKOUNDOU, Anges, Bernard, B-8790 Waregem (BE); SIVASLIGIL, Dogan, Sahin, B-3990 Overijse (BE)
(74) Representative: Dottridge, Cass A.C.
(86) International application number: PCT/EP2010/002996
(87) International publication number: WO 2010/133324

(56) References cited:
- EP-A- 0 338 307
- EP-A- 0 394 731
- EP-A- 0 494 743
- EP-A- 0 496 269
- WO-A-2004/096906
- JP-A- 2003 104 881
- US-A- 4 081 567

## Description

### FIELD OF THE INVENTION

The present invention relates to aqueous polysaccharide compositions. In particular, it relates to stable, high concentration, low viscosity polysaccharide compositions and to a process for producing them.

### BACKGROUND OF THE INVENTION

Polysaccharides are polymeric carbohydrates formed of repeating units joined by glycosidic bonds. Common examples include cellulose and starch. They are used in various forms in nearly all sectors of industry. They can be used, for example, as thickeners in the production of foods and beverages, as binders and/or bulking agents for pharmaceuticals and detergents, as rheology modifiers for adhesives, for textile sizing and so on.

EP 0 394 731 discloses a mixture comprising a cellulose-free xanthan and CMC.

Polysaccharides are typically provided either in a dry, powder form or in solution. Solutions are much preferred because they are easier to handle and easier to mix with other ingredients. Unfortunately, when added to water, polysaccharides can form highly viscous solutions. This problem is particularly pronounced with high molecular weight polysaccharides. Above a certain viscosity, solutions can become very difficult to handle - they effectively form gels which can no longer be pumped and are extremely difficult to mix.

To overcome this problem, polysaccharides can be thinned (i.e. their molecular weight can be reduced) thereby limiting their viscosity-forming potential. However, for certain applications, it is important to keep a high chain length and molecular weight. As such, the only possibility has been to supply polysaccharide solutions at very low concentrations. By way of example, high molecular weight carboxymethyl cellulose (CMC) solutions are limited to a maximum 2% by weight concentration before the viscosity becomes unmanageable. In fact, even 1% solutions already have viscosities of 10000 to 20000 mPas and concentrations of 0.5 to 1% are therefore typically considered a practical maximum.

Clearly, this creates new problems for polysaccharide suppliers for whom it would be more efficient to be able to provide higher concentration solutions. It would also allow end users to add less solution (i.e. less water) to their compositions thereby reducing the need, for instance, for intensive drying. Higher concentration solutions would also reduce packaging and transportation costs and facilitate handling and storage for the customer. There is therefore a clear need in the art for higher concentration, low viscosity aqueous polysaccharide compositions.

### FIGURES

Figure 1: Viscosity profile of a 4% CMC composition of the invention;
Figure 2: Viscosity profile of the 4% CMC composition diluted to 1% CMC.

### SUMMARY OF THE INVENTION

According to a first aspect of the present invention, there is provided an aqueous composition characterised in that it has a pH of 3 or less and in that it comprises at least 2 wt% of one or more anionic polysaccharides suspended in an aqueous dispersion of one or more hydrocolloids, wherein said one or more hydrocolloids are different than said one or more polysaccharides, and in that:
- at a pH of 3 or less, the composition has a Brookfield viscosity (A) of less than 5000 mPas; and that
- at a pH of 6 or more, the composition has a Brookfield viscosity (B) which is at least five times greater than (A).

The anionic polysaccharides are chosen from the group consisting of cellulose, modified cellulose and cellulose derivative.

According to another aspect of the present invention, there is provided a process for preparing an aqueous composition of one or more polysaccharides, characterised in that it includes the step of adding one or more anionic polysaccharides and one or more hydrocolloids to a solution having a pH of 3 or less.

According to a further aspect of the present invention, there is provided an aqueous composition obtainable according to the above process.

### DETAILED DESCRIPTION OF THE INVENTION

Unless specified otherwise, all percentages expressed herein are percentages by weight based on total weight of the composition and all viscosities are expressed as Brookfield viscosities measured with a digital Brookfield DV-II+ viscometer at 25°C with a no. 4 spindle at 100 rpm.

The present invention provides an aqueous composition comprising one or more hydrocolloids and one or more anionic polysaccharides and having a particular viscosity profile. The term "aqueous composition" as used herein refers to a dispersion and/or suspension of matter in water which is homogeneous and stable under normal storage conditions (i.e. at room temperature). The composition will advantageously remain stable (meaning, in particular, that it will not be subject to any notable sedimentation or separation or any detrimental changes in viscosity) for at least 24 hours, preferably for at least 48 hours, more preferably for at least 3 days. According to certain embodiments, the composition will remain stable for at least a week or for at least a month. Ideally, it will remain stable for 3 months or more.

The aqueous composition of the present invention will have a relatively low viscosity under strongly acidic conditions (i.e. at a pH of 3 or below) and a relatively high viscosity under neutral or alkaline conditions (i.e. at a pH of 6 or above, preferably of 7 or above). In particular, at a pH of 3 or below, the composition will have a Brookfield viscosity (A) of less than 5000 mPas and, at a pH of 6 or above, it will have a Brookfield viscosity (B) which is at least five times greater than (A). Preferably, at pH 3 or below, the aqueous composition of the invention will have a viscosity (A) of 2000 mPas or less, more preferably of 1500 mPas or less. According to one particular embodiment, at pH 3 or below, it will have a viscosity (A) in the range of 500 to 1500 mPas. Viscosity (B) will advantageously be at least 10 times greater than (A). According to certain embodiments, (B) will be at least 20 times greater than (A).

As will be apparent to a person skilled in the art, being able to maintain a low viscosity composition will be particularly beneficial, for example, during transport, storage and handling (such as pumping and initial mixing of the aqueous composition with other ingredients). There will often be a need, however, for the composition to have - or indeed to impart - a much higher viscosity in its end use. As noted above, the viscosity of the aqueous composition of the present invention can advantageously be "activated" (i.e. increased) simply by raising the pH of the composition. This increase in pH may be achieved, by way of illustration only, by addition of a base (e.g. NaOH) to the aqueous composition before use or by mixing the aqueous composition, during use, with another composition which is basic in nature.

The composition of the invention comprises one or more anionic polysaccharides suspended in an aqueous dispersion of one or more hydrocolloids. It is understood, in the art, that a hydrocolloid may be a polysaccharide and vice-versa. However, it should be clear, for the purpose of the present invention, that the aqueous composition will comprise at least two separately identifiable components, i.e. that the polysaccharide component and the hydrocolloid component cannot be one and the same. What's more, the hydrocolloid and polysaccharide will be selected based on different functional criteria: the hydrocolloid will be selected based on its ability to impart stability to the aqueous composition under acidic conditions whereas the polysaccharide will be selected for its rheology modifying properties under neutral or alkaline conditions. These functional criteria will be described in more detail below.

The one or more polysaccharides will be anionic (i.e. having a negative charge overall), preferably with a high anionic carboxyl charge, and will preferably have a high molecular weight. The exact molecular weight of the one or more polysaccharides will of course vary according to the type of polysaccharide(s) being used. CMC, for instance, typically has a molecular weight in the range of about 30 000 to 1 000 000 Daltons and a high molecular weight CMC will therefore be a CMC with a molecular weight above 250 000 Daltons. However, the polysaccharides of the present invention will all be characterised by a tendency to form highly viscous gels when dissolved in water, even at low concentrations (i.e. of less than 2%). Examples of suitable polysaccharides include, but are not limited to, cellulose, modified cellulose and cellulose derivatives (such as CMC), hydrocolloids and modified hydrocolloids (such as pectin or alginate), starch, modified starch and starch derivatives (such as n-OSA starch), and mixtures of two or more thereof. According to one preferred embodiment, the polysaccharide will be a high molecular weight, anionic CMC (the term CMC including sodium carboxymethyl cellulose and other variants thereof). A particularly suitable anionic polysaccharide will be a CMC with a molecular weight between 600 000 and 800 000 Daltons, preferably of about 700 000 Daltons, such as Finnfix 100000 from CP Kelco.

It is typically very difficult to solubilise high molecular weight polysaccharides without creating unmanageable, high viscosity compositions. As such, and by way of illustration only, CMC solutions with a manageable viscosity have until now been limited to concentrations of 0.5 to 1% maximum. Advantageously however, the present invention is able to provide aqueous compositions with relatively high concentrations of such polysaccharides which still have a manageable viscosity, as defined above. What's more, the viscosity of the composition will advantageously be stable, meaning that it will remain within a desired range during storage.

It will be understood by the skilled person that what is meant by the term "relatively high concentrations", as used in relation to the polysaccharides of the present composition, will depend on what is normally considered a maximum manageable concentration for the particular polysaccharide(s) under consideration. Thus, for example, a concentration of more than 2% by weight of high molecular weight CMC would be considered a high concentration by a person skilled in the art.

Accordingly, in a preferred embodiment of the present invention, there is provided a composition as described above comprising one or more polysaccharides in a total amount of more than 2%, preferably of more than 3%, more preferably of more than 4% and even more preferably of more than 5% by weight. By way of illustration, high molecular weight CMC may be included in an amount of 0.5-10%, preferably of 2-6%, more preferably of 3-5% by weight of the total aqueous composition.

The one or more hydrocolloids will advantageously be cold water soluble and stable at room temperature, under acidic conditions, in particular at a pH of 3 or less, preferably at a pH of 2 or less. In other words, the one or more hydrocolloids will advantageously be resistant to degradation (e.g. hydrolysis) at low pH. The one or more hydrocolloids will preferably be characterised by their ability to form a stable colloidal dispersion at low shear (suitable to stabilize the present composition), and a low viscosity dispersion at high shear (so that they can be pumped more easily, for instance). It is evident that different hydrocolloids will have to be used at different concentrations to reach the desired viscosity for stabilization. Suitable hydrocolloids include, by way of example only, galactomannans such as guar gum and other (acid stable) hydrocolloids like xanthan gum. Preferably, the hydrocolloid will be a xanthan gum such as, for example, Satiaxane xanthan gums (e.g. Satiaxane CX 2 QD from Cargill, Incorporated). By way of illustration, xanthan gum may be included in the composition of the present invention in an amount of 0.1 to 1% by weight, preferably in an amount of 0.2 to 0.5% by weight, even more preferably in an amount of 0.3 to 0.4% by weight.

Thus, according to one particular embodiment of the present invention, there is provided an aqueous composition having a pH of less than 3, preferably of approximately 2, and comprising 2-6%, preferably 3-5%, more preferably approximately 4% by weight CMC having a molecular weight of 250 000 Daltons or more, preferably of 500 000 Daltons or more, more preferably of approximately 700 000 Daltons, and 0.1-1%, preferably 0.2-0.5%, more preferably 0.25-0.35% by weight xanthan gum. This composition has an overall Brookfield viscosity (A) of 900-1000 mPas.

As will be apparent to the skilled person, one or more additional ingredients may also be included in the composition of the invention provided that they do not unduly impact its essential nature as defined above. Examples of such ingredients could be, for instance, a biocide (the use of which would advantageously prolong the composition's shelf-life) or a plasticiser such as glycerol (for example to provide better freeze-thaw stability and/or to optimise stability and viscosity).

The preparation of such compositions is rendered possible thanks to a novel process which also forms part of the present invention. Thus, according to a further aspect of the present invention, there is provided a process for preparing an aqueous composition of one or more polysaccharides, characterised in that it includes the step of adding one or more anionic polysaccharides and one or more hydrocolloids to a solution having a pH of 3 or less.

The terms "aqueous composition", "one or more polysaccharides" and "one or more hydrocolloids" take on the same meanings as defined above. Thus, the anionic polysaccharide will preferably be a high molecular weight CMC and the hydrocolloid will preferably be xanthan gum. They are added to a solution, preferably an aqueous solution having a pH of 3 or less. Such a solution will typically be obtained by mixing an acid with water.

The acid will preferably be a strong acid. It is used to prevent an unmanageable increase in viscosity as would normally be expected at high concentrations of polysaccharide. Examples of suitable acids include, but are not limited to, hydrochloric acid, sodium hydrogen sulphate, citric acid, acetic acid and sulphuric acid. Most preferably, the acid will be sulphuric acid. The amount of acid used will depend on the nature and quantity of polysaccharide present in the composition. It will advantageously be mixed with water in quantities sufficient to obtain a pH of 3 or less, preferably of 2 or less. More preferably, the acid will be mixed with water to obtain a solution with a pH of approximately 1. By way of example only, an amount of 0.5 to 1% by weight sulphuric acid, based on total water, may be used to reach a desirable pH. According to one particular embodiment, approximately 0.8% by weight sulphuric acid will be used with a concentration of high molecular weight CMC of approximately 4%.

One or more polysaccharides and one or more hydrocolloids are then added to the acidic solution and mixed, preferably by vigorous stirring (to prevent lump formation). The one or more polysaccharides and one or more hydrocolloids may be added together or sequentially, in any order. According to one embodiment, a portion (e.g. up to 50% by weight) of the hydrocolloid(s) may be added to the composition before the one or more polysaccharides, with the remainder being added afterwards. Some or all of the hydrocolloid may even be added to the water before the acid.

Thus, according to a particular embodiment of the invention, there is provided a process for producing an aqueous composition with a high polysaccharide content and a low viscosity, comprising the steps of:
(a) mixing an acid, preferably a strong acid such as sulphuric acid, with water to produce a solution with a pH of 3 or less, preferably a pH of approximately 2;
(b) adding one or more anionic polysaccharides, preferably high molecular weight CMC, to the solution of step (a); and
(c) adding and one or more hydrocolloids, preferably xanthan gum, to the composition of step (b),
wherein, according to one embodiment, the anionic polysaccharide is included in an amount of approximately 4% and the composition obtained in step (c) has a Brookfield viscosity of approximately 900 mPas.

Additional ingredients, if used, may be added at any point during the above process. Timing and preferred dosage will readily be determined based on desired effect and standard practice in the field.

Not only will this process allow for the production of aqueous compositions with high concentrations of polysaccharides without the normally expected increase in viscosity, it has also been found to significantly decrease the incidence of polysaccharide lumping during preparation.

The process may include a further step, referred to herein as the "activating step", whereby the pH of the composition is increased to cause an increase in the viscosity of the composition. Advantageously, the pH will be increased to a pH of 6 or more resulting in an at least five-fold increase in viscosity. As noted above, the increase in viscosity may be achieved by the addition of a base (e.g. NaOH) or by mixing the aqueous composition obtained in step (c) with another composition which is basic in nature.

The composition of the present invention may be used in any application for which the component polysaccharides can be used, e.g. for food and beverage applications, in the paper industry, in the production of adhesives - for example for the corrugating industry, in the textile industry, for the preparation of cosmetics and so on. Such uses and products are also part of the present invention.

It is important to note that although the present invention is most advantageous when dealing with high molecular weight polysaccharides, it may find applicability across all weight ranges. The findings of the present invention could indeed be used to beneficially increase the maximum possible aqueous concentration of polysaccharides of any molecular weight.

A particular embodiment of the present invention will now be described by way of the following, non-limiting Example.

### EXAMPLE

An aqueous composition in accordance with the present invention is prepared by mixing the following ingredients with water in the order listed:
1. 0.75% sulfuric acid (H₂SO₄)
2. 4% CMC (Finnfix 100 000 CP Kelco)
3. 0.2% biocide (Parmetol A28S)
4. 0.35% xanthan gum (Satiaxane CX 2 QD)

The total composition was made up to 300 g in a 600 ml beaker.

### Method:

First a dilute solution of acid in water is produced with a mechanical mixer. To this, under vigorous stirring, the CMC is added slowly into the vortex of the mixture. Mixing is maintained for 15 minutes. Subsequently the biocide and the xanthan gum are added and the composition is stirred for a further 15 minutes. The composition is prepared at room temperature.

The aqueous composition obtained according to the above recipe has a dry solids content of 4.5% by weight, a pH of approximately 2 and a Brookfield viscosity of approximately 900 mPas. After 3 months storage at room temperature, in beakers covered with Parafilm to prevent evaporation, it was observed that the compositions remained stable (stable viscosity and no separation).

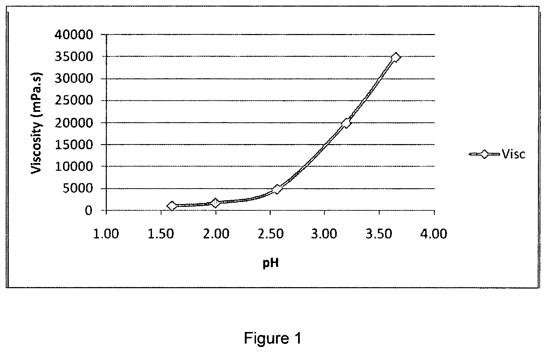

The effect of pH increase on viscosity was assessed by adding drops of concentrated NaOH (32%) to the composition. The results are shown in Figure 1. As can be seen, a doubling in pH (from 1.6 to 3.2) causes a more than 10-fold increase in viscosity.

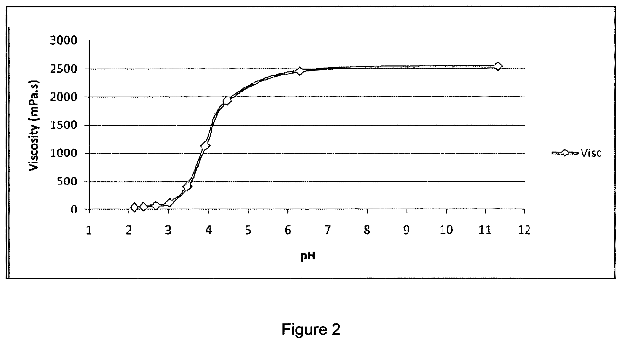

In most practical applications, the aqueous composition of the present invention will be used as a rheology modifier in another composition of greater volume. As such, a further study of the effect of pH increase was performed on a diluted composition (diluted to 1% CMC). The results are shown in Figure 2. As can be seen, viscosity remains very low (less than 250 mPas) at acidic pHs of up to 3. The composition would therefore be very easy to handle. It increases very sharply, however, as the pH increases beyond 3. At pH 4, the viscosity has increased to above 1000 mPas. At pH 5, it has doubled again to more than 2000 mPas and, as the pH reaches neutral values of 6-7, viscosity stabilizes around 2500 mPas. The value of the compositions of the present invention as rheology modifiers in neutral to alkaline compositions thereby becomes apparent.

## Claims

1. An aqueous composition **characterized in that** it has a pH of 3 or less and **in that** is comprises at least 2 wt% of one or more anionic polysaccharides suspended in an aqueous dispersion of one or more hydrocolloids, wherein said one or more hydrocolloids are different than said one or more polysaccharides, wherein said one or more anionic polysaccharides are chosen from the group consisting of cellulose, modified cellulose and cellulose derivative, and further **characterized in that**:
- at a pH of 3 or less, the composition has a Brookfield viscosity (A), as measured with a digital Brookfield DV-II+ viscometer at 25°C with a No. 4 spindle at 100 rpm, of less than 5000 mPas; and that
- at a pH of 6 or more, the composition has a Brookfield viscosity (B) which is at least five times greater than (A).

2. A composition according to claim 1, **characterized in that** the one or more hydrocolloids is xanthan gum.

3. A composition according to any one of the preceding claims, **characterized in that** the one or more polysaccharides is carboxymethyl cellulose (CMC).

4. A composition according to any one of the preceding claims, **characterized in that** it has a pH of 2 or less.

5. An aqueous composition according to any one of the preceding claims, **characterized in that** it comprises at least 4% high molecular weight CMC suspended in an aqueous dispersion of xanthan gum, wherein said CMC has a molecular weight between 600 000 and 800 000 Daltons, and **in that**:
- at a pH of 2 or less, the composition has a Brookfield viscosity (A) of less than 5000 mPas; and that
- at a pH of 6 or more, the composition has a Brookfield viscosity (B) which is at least five times greater than (A).

6. A process for preparing the aqueous composition according to any one of the preceding claims, said composition comprising one or more polysaccharides suspended in an aqueous dispersion of one or more hydrocolloids, **characterized in that** it includes the step of adding one or more anionic polysaccharides and one or more hydrocolloids to a solution having a pH of 3 or less.

7. A process according to claim 6, **characterized in that** the aqueous composition has a Brookfield viscosity (A) of less than 5000 mPas.

8. A process according to claim 6 or claim 7, **characterized in that** the solution is prepared by mixing water with an acid.

9. A process according to any one of claims 6 to 8, **characterized in that** the solution has a pH of 2 or less.

10. A process according to any one of claims 6 to 9, **characterized in that** the one or more polysaccharides is CMC.

11. A process according to any one of claims 6 to 10, **characterized in that** the one or more hydrocolloids is xanthan gum.

12. Use of the aqueous composition of any one of claims 1 to 5 as a rheology modifier.

## Patentansprüche

1. Wässrige Zusammensetzung, **dadurch gekennzeichnet, dass** sie einen pH von 3 oder weniger aufweist und dass sie zumindest 2 Gew.-% eines oder mehrerer anionischer Polysaccharide umfasst, die in einer wässrigen Dispersion eines oder mehrerer Hydrokolloide suspendiert sind, wobei das eine oder die mehreren Hydrokolloide sich von dem einen oder den mehreren Polysacchariden unterscheiden, wobei das eine oder die mehreren anionischen Polysaccharide aus der Gruppe ausgewählt sind, bestehend aus Cellulose, modifizierter Cellulose und Cellulosederivat, und weiter **dadurch gekennzeichnet, dass**:
- bei einem pH von 3 oder weniger die Zusammensetzung laut Messung mit einem digitalen Brookfield-DV-II+-Viskosimeter bei 25 °C mit einer Nummer-4-Spindel bei 100 U/min eine Brookfield-Viskosität (A) von weniger als 5.000 mPas aufweist; und dass
- bei einem pH von 6 oder mehr die Zusammensetzung eine Brookfield-Viskosität (B) aufweist, die zumindest fünfmal so hoch wie (A) ist.

2. Zusammensetzung nach Anspruch 1, **dadurch gekennzeichnet, dass** das eine oder die mehreren Hydrokolloide Xanthangummi sind.

3. Zusammensetzung nach einem der vorstehenden Ansprüche, **dadurch gekennzeichnet, dass** das eine oder die mehreren Polysaccharide Carboxymethylcellulose (CMC) sind.

4. Zusammensetzung nach einem der vorstehenden Ansprüche, **dadurch gekennzeichnet, dass** sie einen pH von 2 oder weniger aufweist.

5. Wässrige Zusammensetzung nach einem der vorstehenden Ansprüche, **dadurch gekennzeichnet, dass** sie zumindest 4 % hochmolekulare CMC aufweist, die in einer wässrigen Dispersion von Xanthangummi suspendiert ist, wobei die CMC ein Molekulargewicht zwischen 600.000 und 800.000 Dalton aufweist, und dass:
- bei einem pH von 2 oder weniger die Zusammensetzung eine Brookfield-Viskosität (A) von weniger als 5.000 mPas aufweist; und dass
- bei einem pH von 6 oder mehr die Zusammensetzung eine Brookfield-Viskosität (B) aufweist, die zumindest fünfmal so hoch wie (A) ist.

6. Verfahren zur Herstellung der wässrigen Zusammensetzung nach einem der vorstehenden Ansprüche, wobei die Zusammensetzung ein oder mehrere Polysaccharide umfasst, die in einer wässrigen Dispersion von einem oder mehreren Hydrokolloiden suspendiert sind, **dadurch gekennzeichnet, dass** es den Schritt des Zusetzens eines oder mehrerer anionischer Polysaccharide und eines oder mehrerer Hydrokolloide zu einer Lösung mit einem pH von 3 oder weniger aufweist.

7. Verfahren nach Anspruch 6, **dadurch gekennzeichnet, dass** die wässrige Zusammensetzung eine Brookfield-Viskosität (A) von weniger als 5.000 mPas aufweist.

8. Verfahren nach Anspruch 6 oder Anspruch 7, **dadurch gekennzeichnet, dass** die Lösung durch Mischen von Wasser mit einer Säure hergestellt wird.

9. Verfahren nach einem der Ansprüche 6 bis 8, **dadurch gekennzeichnet, dass** die Lösung einen pH von 2 oder weniger aufweist.

10. Verfahren nach einem der Ansprüche 6 bis 9, **dadurch gekennzeichnet, dass** das eine oder die mehreren Polysaccharide CMC sind.

11. Verfahren nach einem der Ansprüche 6 bis 10, **dadurch gekennzeichnet, dass** das eine oder die mehreren Hydrokolloide Xanthangummi sind.

12. Verwendung der wässrigen Zusammensetzung nach einem der Ansprüche 1 bis 5 als Rheologiemodifizierungsmittel.

## Revendications

1. Composition aqueuse **caractérisée en ce qu'**elle a un pH égal ou inférieur à 3 et **en ce qu'**elle comprend au moins 2% en poids d'un ou plusieurs polysaccharides anioniques en suspension dans une dispersion aqueuse d'un ou plusieurs hydrocolloïdes, dans laquelle lesdits un ou plusieurs hydrocolloïdes sont différents dudit un ou plusieurs polysaccharides, dans laquelle lesdits un ou plusieurs polysaccharides anioniques sont choisis dans le groupe constitué par la cellulose, la cellulose modifiée et un dérivé de cellulose, et **caractérisée en outre en ce que** :
- à un pH inférieur ou égal à 3, la composition a une viscosité de Brookfield (A), mesurée avec un viscosimètre numérique de Brookfield DV-II+ à 25°C avec une broche n°4 à 100 tr/min, inférieure à 5000 mPas ; et **en ce que**
- à un pH égal ou supérieur à de 6, la composition a une viscosité de Brookfield (B) qui est au moins cinq fois supérieure à (A).

2. Composition selon la revendication 1, **caractérisée en ce que** le ou les hydrocolloïdes sont de la gomme xanthane.

3. Composition selon l'une quelconque des revendications précédentes, **caractérisée en ce que** le ou les polysaccharides sont la carboxyméthylcellulose (CMC).

4. Composition selon l'une quelconque des revendications précédentes, **caractérisée en ce qu'**elle a un pH égal ou inférieur à 2.

5. Composition aqueuse selon l'une quelconque des revendications précédentes, **caractérisée en ce qu'**elle comprend au moins 4% de CMC à haut poids moléculaire en suspension dans une dispersion aqueuse de gomme xanthane, dans laquelle ladite CMC a un poids moléculaire compris entre 600 000 et 800 000 Daltons, et **en ce que** :
- à un pH égal ou inférieur à 2, la composition a une viscosité de Brookfield (A) inférieure à 5000 mPas ; et **en ce que**
- à un pH égal ou supérieur à 6, la composition a une viscosité de Brookfield (B) qui est au moins cinq fois supérieure à (A).

6. Procédé de préparation de la composition aqueuse selon l'une quelconque des revendications précédentes, ladite composition comprenant un ou plusieurs polysaccharides en suspension dans une dispersion aqueuse d'un ou plusieurs hydrocolloïdes, **caractérisée en ce qu'**elle comprend l'étape d'addition d'un ou plusieurs polysaccharides anioniques et d'un ou plusieurs hydrocolloïdes à une solution ayant un pH inférieur ou égal à 3.

7. Procédé selon la revendication 6, **caractérisé en ce que** la composition aqueuse a une viscosité de Brookfield (A) inférieure à 5000 mPas.

8. Procédé selon la revendication 6 ou la revendication 7, **caractérisé en ce que** la solution est préparée en mélangeant de l'eau avec un acide.

9. Procédé selon l'une quelconque des revendications 6 à 8, **caractérisé en ce que** la solution a un pH égal ou inférieur à 2.

10. Procédé selon l'une quelconque des revendications 6 à 9, **caractérisé en ce que** le ou les polysaccharides sont la CMC.

11. Procédé selon l'une quelconque des revendications 6 à 10, **caractérisé en ce que** le ou les hydrocolloïdes sont de la gomme xanthane.

12. Utilisation de la composition aqueuse de l'une quelconque des revendications 1 à 5 en tant que modificateur de rhéologie.
